(19) Europäisches Patentamt / European Patent Office / Office européen des brevets

(11) EP 4 650 943 A1

(12) EUROPEAN PATENT APPLICATION

(43) Date of publication: **19.11.2025 Bulletin 2025/47**

(21) Application number: **25172241.9**

(22) Date of filing: **24.04.2025**

(51) International Patent Classification (IPC): ***G06F 8/41*** *(2018.01)* *G06F 8/30* *(2018.01)* *G06F 8/51* *(2018.01)* *G06F 11/3604* *(2025.01)*

(52) Cooperative Patent Classification (CPC): **G06F 8/427; G06F 8/41; G06F 8/436;** G06F 8/31; G06F 8/51; G06F 11/3604

(84) Designated Contracting States: **AL AT BE BG CH CY CZ DE DK EE ES FI FR GB GR HR HU IE IS IT LI LT LU LV MC ME MK MT NL NO PL PT RO RS SE SI SK SM TR**
Designated Extension States: **BA**
Designated Validation States: **GE KH LA MA MD TN**

(30) Priority: **17.05.2024 CN 202410614947**

(71) Applicant: **Guangzhou Yunbiaoju Network Technology Co., Ltd.**
**Guangzhou City, Guangdong Province (CN)**

(72) Inventor: **ZHANG, Yadong**
**Guangzhou City, Guangdong Province (CN)**

(74) Representative: **Tahtadjiev, Konstantin**
**J.k. Goce Delchev bl.237, vh. B, et. 4, ap. 28**
**1404 Sofia (BG)**

# (54) A METHOD AND SYSTEM FOR RECOGNIZING MIXED LANGUAGES

(57) This application relates to the field of language compilation technology and discloses a method and system for recognizing mixed languages. The method includes: obtaining a micro-language written by a user using keywords within the user's business domain based on a preset programming language strategy; obtaining a domain-specific language corresponding to the micro-language; parsing the domain-specific language and the micro-language and obtaining a mixed abstract syntax tree based on the parsing results; and using the mixed abstract syntax tree to obtain machine code corresponding to the micro-language. The corresponding system is also disclosed. This application reduces programming difficulty, improves program readability, and facilitates program maintenance through the writing of micro-languages. By comparing the first and second abstract syntax trees and comparing with historical data, the structure of the mixed abstract syntax tree is optimized, accurate compilation from micro-language to machine code is achieved, and optimization of micro-language writing is also realized. Finally, a simple language compilation environment is provided for beginners in language compilation.

Obtaining a micro-language, wherein the micro-language is a programming language written by a user using keywords within the user's business domain based on a preset programming language strategy.
S1
Performing language conversion using the micro-language to obtain a domain-specific language corresponding to the micro-language.
S2
Parsing the domain-specific language and the micro-language, and obtaining a mixed abstract syntax tree based on parsing results.
S3
Performing machine code compilation using the mixed abstract syntax tree to obtain machine code corresponding to the micro-language.
S4
FIG. 1



Processed by Luminess, 75001 PARIS (FR)

## Description

The present application relates to the field of language compilation technology, and more specifically, to a method and system for recognizing mixed languages.

## Technical field

In language compilation, complex keywords and syntax can present challenges for novice programmers, thereby increasing the barrier to entry. Moreover, implementing complex business logic often results in increasingly complex program code, which can hinder comprehension and degrade the user experience.

Chinese Patent Publication No. CN113687833A discloses a mixed compilation method, a mixed compilation system, a compiler, and a storage medium. This publication describes standard correction of source code, preprocessing to conform to standard specifications, meeting code execution needs of different target platforms, generating mixed compilation information through backend analysis, and generating target machine code based on the mixed compilation information, without requiring target platform auxiliary compilation, thereby achieving mixed compilation adaptable to multiple target platforms.

However, a simplified language compilation solution specifically designed for novice programmers is lacking in the prior art.

## Summary of the invention

It is an object of the present invention to provide a method and system for recognizing mixed languages that addresses the aforementioned problems in the prior art.

In a first aspect, the present invention provides a method for recognizing mixed languages, the method comprising:

S1 :Obtaining a micro-language, wherein the micro-language is a programming language written by a user using keywords within the user's business domain based on a preset programming language strategy;

S2 : Performing language conversion using the micro-language to obtain a domain-specific language corresponding to the micro-language;

S3 :Parsing the domain-specific language and the micro-language, and obtaining a mixed abstract syntax tree based on parsing results;

S4 : Performing machine code compilation using the mixed abstract syntax tree to obtain machine code corresponding to the micro-language.

By writing a micro-language, program writing is simplified, and accurate compilation of the micro-language is achieved through the mixed abstract syntax tree.

Preferably, the user based on the preset programming language strategy comprises:
The user writing the micro-language based on keyword characteristics of the programming language.

By writing the micro-language based on the keyword characteristics of the programming language and keywords specific to the business domain, program writing is simplified and program readability is improved.

Preferably, parsing the domain-specific language and the micro-language comprises:
Based on the domain-specific language, obtaining a abstract syntax tree of the domain-specific language, and defining the abstract syntax tree of the domain-specific language as a first abstract syntax tree;

Based on the micro-language, obtaining a abstract syntax tree of the micro-language, and defining the abstract syntax tree of the micro-language as a second abstract syntax tree.

The first and second abstract syntax trees provide logical support for machine code compilation of the micro-language.

Preferably, obtaining the mixed abstract syntax tree based on the parsing results comprises:
Comparing the first abstract syntax tree and the second abstract syntax tree, retaining coincident nodes of the first abstract syntax tree and the second abstract syntax tree in the mixed abstract syntax tree, and retaining nodes in the second abstract syntax tree that do not coincide with the first abstract syntax tree in the mixed abstract syntax tree;

Analyzing each node in the first abstract syntax tree that does not coincide with the second abstract syntax tree, the analyzing comprising:
Obtaining historical data corresponding to each node in the first abstract syntax tree that does not coincide with the second abstract syntax tree. Calculating a compilation accuracy rate "P" for each non-coincident node, $P_k = \frac{n_k}{N_k}$, wherein $P_k$ is the compilation accuracy rate corresponding to node "k", $N_k$ is a number of times node "k" appears, and $n_k$ is a number of times node "k" is correctly compiled. Determining whether the compilation accuracy rate is greater than a preset compilation accuracy rate threshold, and if so, retaining node "k" in the mixed abstract syntax tree, otherwise discarding node "k".

Analyzing the non-coincident nodes of the first and second abstract syntax trees optimizes the structure of the mixed abstract syntax tree, ensuring accurate compilation of the micro-language.

Preferably, the analyzing further comprises:
Before performing the compilation accuracy rate calculation, obtaining historical micro-languages from historical data corresponding to each node in the first abstract syntax tree that does not coincide with the second abstract syntax tree, and defining the obtained micro-languages as historical micro-languages;

Using NLP technology to perform industry meaning analysis on a historical micro-language corresponding to node "k" and the micro-language corresponding to current compilation, and determining whether results of the industry meaning analysis are the same, and if so, retaining node "k" and performing the compilation accuracy rate calculation, otherwise discarding node "k".

Comparing the current compilation with historical data improves the accuracy of the mixed abstract syntax tree and facilitates continuous optimization of micro-language writing through the accumulation of historical data.

In a second aspect, the present invention provides a system for recognizing mixed languages, the system comprising:

A micro-language acquisition module configured to acquire a micro-language input by a user, wherein the micro-language is a programming language written by the user using keywords within the user's business domain based on a preset programming language strategy;

A micro-language conversion module configured to perform language conversion using the micro-language to obtain a domain-specific language corresponding to the micro-language;

A mixed abstract syntax tree generation module configured to parse the domain-specific language and the micro-language, and obtain a mixed abstract syntax tree based on parsing results;

A compilation module configured to perform machine code compilation using the mixed abstract syntax tree to obtain machine code corresponding to the micro-language.

The preferred embodiments and their advantages for the system are the same as described above for the method. The system works in conjunction with the method, enabling language compilers to write programs based on keywords within their business domain, reducing programming difficulty, improving program readability, and facilitating program maintenance.

The method and system of the present invention reduce programming difficulty, improve program readability, and facilitate program maintenance through the use of micro-languages. By comparing the first and second abstract syntax trees and using historical data, the structure of the mixed abstract syntax tree is optimized, achieving accurate compilation from micro-language to machine code and enabling optimization of micro-language writing.

## Brief description of the drawings

For a more complete understanding of the present invention, reference is now made to the following drawings, which are for illustrative purposes only and are not intended to limit the scope of the invention.

FIG. 1 is a schematic flow chart illustrating a method for recognizing mixed languages according to an embodiment of the present invention.

FIG. 2 is a specific example provided in an embodiment of the present application.

FIG. 3 is a schematic block diagram illustrating a system for recognizing mixed languages according to an embodiment of the present invention.

## Detailed description of the preferred embodiments

The following detailed description sets forth numerous specific details to provide a thorough understanding of the invention. However, it will be apparent to one of ordinary skill in the art that the invention may be practiced without these specific details. In other instances, well-known features have not been described in detail to avoid unnecessarily obscuring the invention.

Throughout this specification, the term "comprising" means that the recited elements are necessarily included, but that other elements may be optionally included as well.

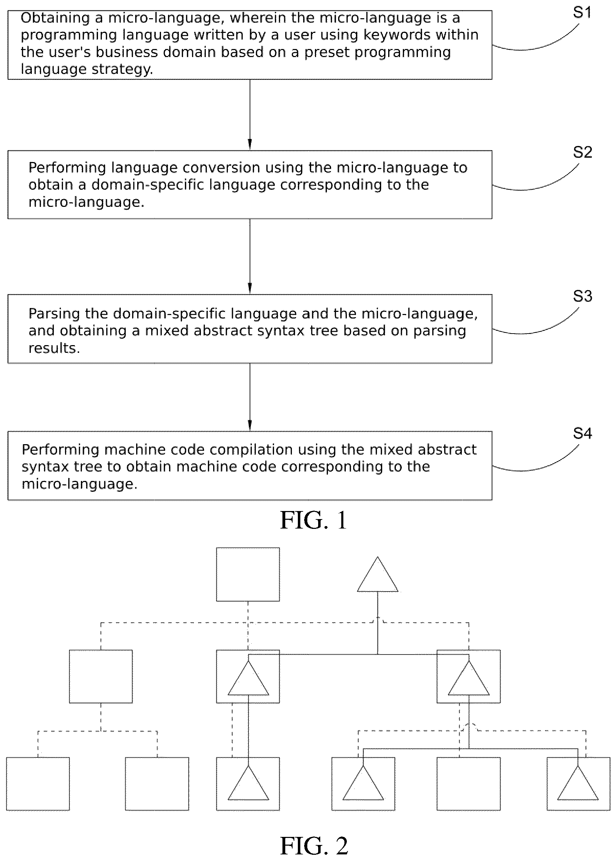

Referring now to FIG. 1, a first aspect of this embodiment discloses a method for recognizing mixed languages. The method comprises the following steps:

Obtaining a micro-language (S1): The micro-language is a programming language written by a user using keywords within the user's business domain based on a preset programming language strategy. This strategy defines the rules and conventions for constructing the micro-language, ensuring consistency and enabling automatic processing. The micro-language is designed to simplify programming by using familiar business terms.

Performing language conversion (S2): The micro-language is converted to obtain a corresponding domain-specific language (DSL). This conversion translates the user-friendly micro-language into a more structured and formally defined language suitable for parsing and compilation.

Parsing (S3): The domain-specific language and the micro-language are parsed, and a mixed abstract syntax tree (AST) is obtained based on the parsing results. This mixed AST represents the combined structure of both languages, capturing the relationships between the micro-language elements and their corresponding DSL constructs.

Machine code compilation (S4): Machine code corresponding to the micro-language is obtained using the mixed AST. The compiler traverses the mixed AST, generating the appropriate machine instructions for execution.

By writing a micro-language, program writing is simplified, and accurate compilation of the micro-language is achieved using the mixed abstract syntax tree.

Specifically, the user based on the preset programming language strategy comprises:
The user writing the micro-language based on the keyword characteristics of the programming language. This ensures that the micro-language adheres to basic programming principles while incorporating domain-specific terms.

Further, by writing the micro-language based on the keyword characteristics of the programming language and keywords of the business domain, program writing is simplified and program readability is improved.

The micro-language aims to facilitate the implementation of business function logic for users, allowing users to customize and extend keywords. For example, based on Codigger system, in the writing of ObjectSense micro-language, the writing must conform to the keyword characteristics of ObjectSense. The micro-language, being related to business functions, makes the code program logic concise and easy to maintain, and facilitates users to implement function logic within their specific business scope. ObjectSense programming language has concise and clear keywords and syntax, which is user-friendly for beginners and reduces the entry threshold.

In implementing different business functions, complex functional logic can cause the written program code to become complex. To maintain clarity and ease of use for programs written in OSE language, the micro-language is defined.

Specifically, parsing the domain-specific language and the micro-language comprises:
Based on the domain-specific language, obtaining a abstract syntax tree of the domain-specific language, and defining the abstract syntax tree of the domain-specific language as a first abstract syntax tree.

Based on the micro-language, obtaining a abstract syntax tree of the micro-language, and defining the abstract syntax tree of the micro-language as a second abstract syntax tree.

The first and second abstract syntax trees provide logical support for machine code compilation of the micro-language.

Specifically, referring to FIG. 2, the hybrid abstract syntax tree is obtained based on the parsing result, and specifically includes:
In FIG. 2, the triangles represent the nodes of the first abstract syntax tree, the squares represent the nodes of the second abstract syntax tree, the nodes represented by only triangles or only squares indicate non-overlapping nodes, and the nodes represented by both triangles and squares indicate overlapping nodes.

Comparing the first abstract syntax tree and the second abstract syntax tree, retaining the coincident nodes of the first abstract syntax tree and the second abstract syntax tree in the mixed abstract syntax tree, and retaining the nodes in the second abstract syntax tree that do not coincide with the first abstract syntax tree in the mixed abstract syntax tree.

Analyzing each node in the first abstract syntax tree that does not coincide with the second abstract syntax tree, the analyzing comprising:
Obtaining historical data corresponding to each node in the first abstract syntax tree that does not coincide with the second abstract syntax tree. Calculating a compilation accuracy rate "P" for each non-coincident node, $P_k = \frac{n_k}{N_k}$, wherein $P_k$ is the compilation accuracy rate corresponding to node "k", $N_k$ is a number of times node "k" appears, and $n_k$ is a number of times node "k" is correctly compiled. Determining whether the compilation accuracy rate is greater than a preset compilation accuracy rate threshold, and if so, retaining node "k" in the mixed abstract syntax tree, otherwise discarding node "k".

Analyzing the non-coincident nodes optimizes the structure of the mixed abstract syntax tree, ensuring accurate compilation of the micro-language.

The analyzing further comprises:
Before performing the compilation accuracy rate calculation, obtaining historical micro-languages from historical data corresponding to each node in the first abstract syntax tree that does not coincide with the second abstract syntax tree, and defining the obtained micro-languages as historical micro-languages.

Using NLP technology to perform industry meaning analysis on the historical micro-language corresponding to node "k" and the micro-language corresponding to the current compilation, and determining whether the results of the industry meaning analysis are the same. If so, retaining node "k" and performing the compilation accuracy rate calculation; otherwise, discarding node "k".

Comparing the current compilation with historical data improves the accuracy of the mixed abstract syntax tree and facilitates continuous optimization of micro-language writing through the accumulation of historical data. The abstract syntax tree parsed by the program is a mixture of the abstract syntax tree of the micro-language and the abstract syntax tree of the domain-specific language. This differs from the macro language definition of other languages, which typically involves substituting the abstract syntax tree of one language within another.

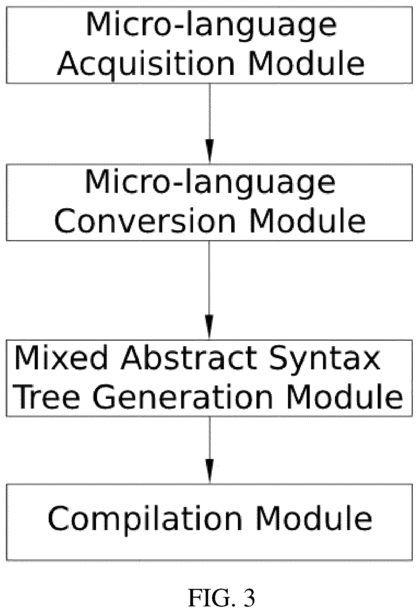

Referring now to FIG. 3, a second aspect of this embodiment discloses a system for recognizing mixed languages, the system comprising:
A micro-language acquisition module configured to acquire a micro-language input by a user, wherein the micro-language is a programming language written by the user using keywords within the user's business domain based on a preset programming language strategy.

A micro-language conversion module configured to perform language conversion using the micro-language to obtain a domain-specific language corresponding to the micro-language.

A mixed abstract syntax tree generation module configured to parse the domain-specific language and the micro-language, and obtain a mixed abstract syntax tree based on parsing results.

A compilation module configured to perform machine code compilation using the mixed abstract syntax tree to obtain machine code corresponding to the micro-language.

In summary, the method and system for recognizing mixed languages reduce the difficulty of programming, improve program readability, and facilitate program maintenance by using micro-language writing. By comparing the first abstract syntax tree and the second abstract syntax tree and comparing with historical data, the structure of the mixed abstract syntax tree is optimized, thereby realizing accurate compilation from micro-language to machine code and also realizing optimization of micro-language writing.

It will be understood that the embodiments described herein may be implemented in hardware, software, firmware, middleware, code, or any suitable combination thereof. For a hardware implementation, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For a software implementation, some or all of the processes described in the embodiments may be implemented by a computer program product including instructions that, when executed by related hardware, cause the hardware to perform the described processes. Such a program may be stored or transmitted as one or more instructions or code on a computer-readable storage medium. Computer-readable storage media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer.

It is to be understood that the foregoing descriptions are merely illustrative of preferred embodiments of the present invention, and are not intended to be limiting. Many modifications and variations may be made by those skilled in the art without departing from the spirit and scope of the invention. Any modification, equivalent substitution, or improvement within the spirit and principle of the present invention is intended to be included within the scope of protection of the present invention.

## Claims

**1.** A method for recognizing mixed languages, the method comprising:

S1 :Obtaining a micro-language, wherein the micro-language is a programming language written by a user using keywords within a user's business domain based on a preset programming language strategy;
S2 : Performing language conversion using the micro-language to obtain a domain-specific language corresponding to the micro-language;
S3 :Parsing the domain-specific language and the micro-language, and obtaining a mixed abstract syntax tree based on parsing results;
S4 : Performing machine code compilation using the mixed abstract syntax tree to obtain machine code corresponding to the micro-language.
The parsing of the domain-specific language and the micro-language specifically comprises:

Generating a abstract syntax tree of the domain-specific language based on the domain-specific language, wherein the domain-specific language abstract tree is defined as a first abstract syntax tree;
Generating a abstract syntax tree of the micro-language based on the micro-language, wherein the micro-language abstract tree is defined as a second abstract syntax tree.
The generating of the hybrid abstract syntax tree based on the parsing results specifically comprises:

Comparing the first abstract syntax tree and the second abstract syntax tree, retaining nodes that are common to both the first abstract syntax tree and the second abstract syntax tree in the hybrid language abstract tree, and also retaining nodes in the second abstract syntax tree that are not common to the first abstract syntax tree in the hybrid language abstract tree;
Analyzing each node in the first abstract syntax tree that does not coincide with the second abstract syntax tree, the analyzing comprising:
Obtaining historical data corresponding to each node in the first abstract syntax tree that does not coincide with the second abstract syntax tree. Calculating a compilation accuracy rate "P" for each non-coincident node,

$$P_k = \frac{n_k}{N_k}$$

, wherein $P_k$ is the compilation accuracy rate corresponding to node "k", $N_k$ is a number of times node "k" appears, and $n_k$ is a number of times node "k" is correctly compiled. Determining whether the compilation accuracy rate is greater than a preset compilation accuracy rate threshold, and if so, retaining node "k" in the mixed abstract syntax tree, otherwise discarding node "k".

**2.** The method of claim 4, wherein the analyzing further comprises:

Before performing the compilation accuracy rate calculation, obtaining historical micro-languages from historical data corresponding to each node in the first abstract syntax tree that does not coincide with the second abstract syntax tree, and defining the obtained micro-languages as historical micro-languages;
Using NLP technology to perform industry meaning analysis on a historical micro-language corresponding to node "k" and the micro-language corresponding to current compilation, and determining whether results of the industry meaning analysis are the same, and if so, retaining node "k" and performing the compilation accuracy rate calculation, otherwise discarding node "k".

**3.** A system for recognizing mixed languages, the system comprising:

A micro-language acquisition module configured to acquire a micro-language input by a user, wherein the micro-language is a programming language written by the user using keywords within the user's business domain based on a preset programming language strategy;
A micro-language conversion module configured to perform language conversion using the micro-language to obtain a domain-specific language corresponding to the micro-language;
A mixed abstract syntax tree generation module configured to parse the domain-specific language and the micro-language, and obtain a mixed abstract syntax tree based on parsing results;
A compilation module configured to perform machine code compilation using the mixed abstract syntax tree to obtain machine code corresponding to the micro-language.
The parsing of the domain-specific language and the micro-language specifically comprises:
Generating a abstract syntax tree of the domain-specific language based on the domain-specific language, wherein the domain-specific language abstract tree is defined as a first abstract syntax tree;
Generating a abstract syntax tree of the micro-language based on the micro-language, wherein the micro-language abstract tree is defined as a second abstract syntax tree.
The generating of the hybrid abstract syntax tree based on the parsing results specifically comprises:

Comparing the first abstract syntax tree and the second abstract syntax tree, retaining nodes that are common to both the first abstract syntax tree and the second abstract syntax tree in the hybrid language abstract tree, and also retaining nodes in the second abstract syntax tree that are not common to the first abstract syntax tree in the hybrid language abstract tree;
Analyzing each node in the first abstract syntax tree that does not coincide with the second abstract syntax tree, the analyzing comprising:
Obtaining historical data corresponding to each node in the first abstract syntax tree that does not coincide with the second abstract syntax tree. Calculating a compilation accuracy rate "P" for each non-coincident node,

$$P_k = \frac{n_k}{N_k}$$

, wherein $P_k$ is the compilation accuracy rate corresponding to node "k", $N_k$ is a number of times node "k" appears, and $n_k$ is a number of times node "k" is correctly compiled. Determining whether the compilation accuracy rate is greater than a preset compilation accuracy rate threshold, and if so, retaining node "k" in the mixed abstract syntax tree, otherwise discarding node "k".

**5.** The system of claim 4, wherein the analyzing further comprises:

Before performing the compilation accuracy rate calculation, obtaining historical micro-languages from historical data corresponding to each node in the first abstract syntax tree that does not coincide with the second abstract syntax tree, and defining the obtained micro-languages as historical micro-languages;

Using NLP technology to perform industry meaning analysis on a historical micro-language corresponding to node "k" and the micro-language corresponding to current compilation, and determining whether results of the industry meaning analysis are the same, and if so, retaining node "k" and performing the compilation accuracy rate calculation, otherwise discarding node "k".

Obtaining a micro-language, wherein the micro-language is a programming language written by a user using keywords within the user's business domain based on a preset programming language strategy.
S1
Performing language conversion using the micro-language to obtain a domain-specific language corresponding to the micro-language.
S2
Parsing the domain-specific language and the micro-language, and obtaining a mixed abstract syntax tree based on parsing results.
S3
Performing machine code compilation using the mixed abstract syntax tree to obtain machine code corresponding to the micro-language.
S4
FIG. 1

FIG. 2

Micro-language Acquisition Module
Micro-language Conversion Module
Mixed Abstract Syntax Tree Generation Module
Compilation Module

FIG. 3

# EUROPEAN SEARCH REPORT

Application Number
EP 25 17 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/350085 A1 (HORIE MICHIHIRO [JP] ET AL) 1 December 2016 (2016-12-01) * paragraph [0004] - paragraph [0083]; claims 1-7; figures 1-7 * ----- | 1-5 | INV. G06F8/41 ADD. G06F8/30 G06F8/51 G06F11/3604 |
| A | CN 111 651 165 A (SHENZHEN TATFOOK NETWORK TECH CO LTD) 11 September 2020 (2020-09-11) * paragraph [0001] - paragraph [0062]; claims 1-9; figures 1-3 * ----- | 1-5 | |
| A,D | CN 113 687 833 A (SHENZHEN INOVANCE TECH CO LTD) 23 November 2021 (2021-11-23) * the whole document * ----- | 1-5 | |

TECHNICAL FIELDS SEARCHED (IPC)

G06F

The present search report has been drawn up for all claims

| Place of search | Date of completion of the search | Examiner |
|---|---|---|
| Munich | 29 September 2025 | Rackl, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 2241

This annex lists the patent family members relating to the patent documents cited in the above-mentioned European search report. The members are as contained in the European Patent Office EDP file on
The European Patent Office is in no way liable for these particulars which are merely given for the purpose of information.

29-09-2025

| Patent document cited in search report | Publication date | Patent family member(s) | Publication date |
|---|---|---|---|
| US 2016350085 A1 | 01-12-2016 | US 9459848 B1 | 04-10-2016 |
| | | US 2016350085 A1 | 01-12-2016 |
| | | US 2016350086 A1 | 01-12-2016 |
| CN 111651165 A | 11-09-2020 | NONE | |
| CN 113687833 A | 23-11-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 113687833 A